# EUROPEAN PATENT SPECIFICATION

(11) **EP 0 645 419 B1**
(45) Date of publication and mention of the grant of the patent: **30.08.2000**
(21) Application number: 93912017.6
(22) Date of filing: 16.04.1993
(51) Int. Cl.: C08J 9/24

(54) **POROUS MATERIAL AND METHOD FOR ITS PREPARATION**
PORÖSES MATERIAL UND VERFAHREN ZU SEINER HERSTELLUNG
MATERIAU POREUX ET PROCEDE POUR SA PRODUCTION

(30) Priority: 18.05.1992 RU 5084905; 09.10.1992 RU 6480805
(43) Date of publication of application: 29.03.1995
(73) Proprietor: Obshchestvo S Ogranichennoy Otvetstvennostyu Polimerplast, 606025 Dzerzhinsk, Nizhny Novgorod Region (RU); OTKRYTOYE AKTSIONERNOYE OBSHCHESTVO SOSNOVSKAGROPROMTEKHNIKA, 606170 Sosnovskoye, Nizhny Novgorod Region (RU)
(72) Inventor: MOROZOV, Igor Viktorovich, Dzerzhinsk, 606007 (RU); STRELKOVA, Ljubov Dmitrievna, Dzerzhinski, 606034 (RU)
(74) Representative: VOSSIUS & PARTNER
(86) International application number: RU9300089
(87) International publication number: WO9323464

(56) References cited:
- DE-B- 1 290 335
- SU-A- 90 375
- SU-A- 912 738
- SU-A- 1 643 570
- US-A- 3 349 046
- US-A- 3 438 912

## Description

The invention relates to porous polyvinylchloride (PVC) materials and their production methods.

It is known, that light porous PVC materials with improved physical and mechanical properties, e.g. high elasticity and thermostability, very often are multicomponent systems, including a number of specially aimed additives: foaming, stabilizing and cross-linking agents, fillers, lubricants, etc. However, introduction of specially aimed additives, which improve some properties, causes worsening of other ones and increase of the materials cost.

There is known a porous material, consisting of PVC without any additive, which is characterized by a total porosity of 48-49% and by a pore max. diameter of 18-22 microns (The USSR Inventor's Certificate No. 651014, C O8 J 9/24// B 29 D 27/08,published in 1979).Reproduction of this material showed, that it has a corpuscular pore structure, characterized by an apparent density of 0.72 g/cu.cm, an open porosity of 49% an average diameter of open pores of 15 microns and absence of cross-linking (the insoluble fraction amount is zero); its elasticity (measured as a minimal diameter of the roller, around which the material bends without failure) is 35 mm. The material destruction rate under vacuum at 175°C, which characterizes its thermostability, is 1.25.10⁻⁶ mg HCl/g PVC.s. The relation of breaking stress at tension to apparent density is 4.3 MPa.cu.cm/g.

From this reference there is known the method of porous material production by molding PVC powder in a cold state by a roller, the lower layer of not treated PVC and upper layer of PVC preliminary thermally treated at 100-150°C, or the lower and the upper layers, of thermally treated PVC and the interfacial layer of not treated PVC, are being applied on the backing with the following heating at 200°C for 3 mins. or at 280°C for 1 min.

The proximate to the suggested material according to the technical concept is the known porous material of PVC (unspecified) containing no additives, characterized by a total porosity of 49-50% and pore a max. diameter of 25-30 microns, which has an elasticity (determined by the above mentioned method) of 30 mm and a tensile strength of 3.5-5.0 MPa (The USSR Inventor's Certificate No. 439497, C O8 J 47/08, published in 1974). Reproduction of this material showed, that it has a corpuscular pore structure, characterized by an apparent density of 0.70-0.72 g/cu.cm, an open porosity of 50%, an average diameter of open pores of 20 microns and absence of cross-linking (the insoluble fraction is absent). When tested by bending around the roller having a diameter of less than 30 mm the material is destroyed. i.e. its elasticity is 30 mm. The material destruction rate under vacuum at 175°C is 1.20.10⁻⁶ mg HCl/g PVC.s. The relation or breaking stress at tension to apparent density is 4.9-7.0 MPa cu.cm/g.

From this reference there is known the method, which is proximate to the method of the present invention according to technical concept. This known method comprises a preliminary treatment of powder PVC by its heating at 125-130°C and molding in a free state by a roller on the moving backing, followed by heating in a tunnel oven at 180-220°C, the treatment by water and surfactant solution.

US-A-3438912 discloses a porous, permeable sheet consisting essentially of a vinyl chloride polymer.

The corpuscular noncross-linked porous structure of the described materials provides their relatively low strength and elasticity.

An object of this invention is to provide a one-component porous PVC material, having an alternative structure and new properties, in particular, improved strength and elasticity.

To achieve this object there is suggested a porous material characterized by 5-98% cross-linking extent which is determined as percentage of the fraction insoluble in tetrahydrofuran at 30°C, and being obtainable by a process comprising a preliminary treatment of powder emulsion or microsuspension polyvinylchloride and its following heating, wherein polyvinylchloride is subjected to an aggregating treatment and then it is heated at 190-300°C for 3-15 mins, wherein the aggregating treatment comprises molding of powder polyvinylchloride under a pressure of 0.5-400 MPa and at a temperature of 20-170°C to achieve 0.85-1.38 g/cu.cm density or comprises granulating of powder polyvinylchloride, isolation of the faction of 0.2 to 4.0 mm granules and its molding in a free state as a layer of 4-16 mm height.

It was found, that the preliminary aggregating treatment of powder PVC allows to set in it such structure formations, which in the process of the following heating lead to obtaining of cross-linked porous structures. The presence of such structures provides improved strength and elasticity of the porous material. Simultaneously, its thermostability is being increased.

Improved strength, elasticity and thermostability of the suggested material in comparison with the one-component porous PVC materials of the prior art are conditioned by its distinguishing features: cellular structure and presence of cross-linking. From the prior art it is known, that the materials of cellular structure at other parameters being equal have higher elasticity than those, of corpuscular structure, and cross-linked materials have higher strength than noncross-linked ones. However, it is also known, that cross-linking may cause lowering of elasticity, and strength alteration during transition from corpuscular to cellular structure may be different. Hence it appears, that the prior art does not result in influence of combination of the proposed PVC materials distinguishing features - cellular structure and cross-linking extent - on its strength and elasticity and especially on its thermostability. The porous material of less than 5% cross-linking extent has low elasticity, and that one of more than 98% cross-linking extent - low thermostability.

Depending on what kind of articles are to be manufactured of the proposed material, alternative embodiments of preliminary aggregating treatment are possible.

If the material is intended for production of piece articles of a predetermined shape, it is advisable to carry out aggregating treatment by molding PVC under a pressure of 0.5-400 MPa and at a temperature of 20-170°C to achieve a density of 0.85-1.38 g/cu.cm. In this case aggregating of the powder PVC particles takes place in its full volume. subjected to molding. In the process of further heating the PVC attains a cellular porous structure. The material obtained according to this embodiment of the present invention is characterized by a cellular porous structure, having 5-98% cross-linking extent, 0.15-1.20 g/cu.cm apparent density, 0.5-75% open porosity, 1-90 microns average diameter of the open pores, 1-2 mm elasticity, 8.5-33 MPa.cu.cm/g ratio of breaking stress at tension to apparent density, /0.2-0.8/.10⁻⁶ mg HCl/g PVC.s. destruction rate under vacuum at 175°C.

The combination of the material properties in the above given ranges, required for a definite consumer, is achieved due to selection of the material production process parameters within the scope of the present invention.

Realization of this alternative embodiment of aggregating treatment at a temperature of below 20°C and molding pressure above 400 MPa does not affect the material properties, but requires additional power consumption. Reducing pressure below the claimed value and increasing temperature above the claimed value do not lead to formation of a porous material suitable for application. Molding of the powder PVC, having a density below 0.85 g/cu.cm or above 1.38 g/cu.cm, either do not allow to obtain an integral material, or leads to obtaining a material, having high apparent density and low cross-linking extent.

To obtain the textured surface articles or long-size articles another alternative embodiment is preferred, in which the aggregating treatment includes granulating powder PVC, isolation of the fraction of 0.2 to 4.0 mm diameter granules, its molding in a free state in the form of 4-16 mm thickness layer. In this case the PVC particles aggregation takes place in the process of granules formation, and the processes, proceeding during the following heating of PVC inside the granules and on the surface of their contact, lead to cellular porous structure formation.

The powder PVC granulation, required for the present process realization, may be carried out in any known manner, which provides the PVC particles aggregating, i.e. by mixing at heating or at self-heating (by the powder vibration treating, by extrusion, etc.).

Realization of the embodiment, using the granules size of the layer thickness below the claimed ones, leads to high density material production, and with those above the claimed ones - to obtaining the material unfit for further application (pits, rugged surface etc.).

The obtained material is characterized by a cellular structure, 5-98% cross-linking extent, 0.30-0.80 g/cu.cm apparent density, 1 mm elasticity, and according to its properties it is like the material produced according to the first embodiment of the present invention.

The embodiments described above may be used for production both long-size and piece articles.

PVC heating after the preliminary aggregating treatment is fulfilled in both embodiments at 190-300°C for 3-15 min. Moreover, as a rule, the heating temperature increase reduces its duration. At a heating temperature and time, which are below the claimed ones, a noncross-linked material of high apparent density (1.25-1.32 g/cu.cm) is formed. The process realization at a heating temperature and time, which are above the claimed ones, does not lead to formation of porous material useful for application.

The material properties, required for a definite user, in the above mentioned ranges are achieved due to the selection of an embodiment and its production parameters in the claimed ranges.

For better understanding of the present invention there arc given illustrative examples of its realization.

### Example 1.

Powder emulsion PVC (TU 6-02-69-89) is molded under a pressure Pₘₒ = 0.5 MPa and a temperature Tₘₒ = 80° C. The pelletized material (d = 10 mm, h = 6 mm), having a density rₚ = 0.85 g/cu.cm, is heated in a free state at an oven temperature Tₕ = 250° C for tₕ = 6 mins. A microporous material of cellular structure; determined by optical and electrone microscopy methods, is obtained.

The apparent density rₘ and the open porosity Pₒₚ are determined by a hydrostatic weighing; the average diameter of the open pores Dₐᵥ is determined by air forcing through the material of 1 mm thickness. The cross-linking extent as an insoluble fraction amount (P_{if}) is determined by solving in tetrahydrofuran for 24 hrs. at 30°C. The value of breaking stress at tension is determined according to GOST 17370-71 and the ratio of this index to the material apparent density p_{b}/rₘ is calculated. The elasticity (E) of 0.8 mm thickness material is evaluated by the roller of minimal diameter, at bending of which no material destruction occurs. The thermodestruction rate (V_{HCl}) is the amount of HCl, isolated at 175° C under vacuum; per unit of PVC mass in a unit of time.

Table 1 illustrates the working conditions and the material properties according to this and the following examples.

### Examples 2-20.

The process is performed according to the procedure of Example 1, the conditions of the material production being changed, thus in examples 2-12 an emulsion PVC (TU 6-02-69-89) is used, in examples 13-15 an emulsion PVC (GOST 14039-78) is used, in examples 16-20 a microsuspension PVC (TU 6-01-1265-81) is used. A porous material of cellular structure is obtained.

### Example 21 (Comparative).

Powder emulsion PVC (TU 6-02-69-89) is thermally treated at 130°C in a mixer, then cooled and sieved through sieve No. 55-61 (particle size is 1-100 microns), then it is fed to the second bin of the belt machine for molding. The first bin is charged with the same PVC without thermal treatment. From the first bin PVC is fed to a metal belt, on which a smooth molding roller is located. The molded layer of 0.4 mm thickness advances under the outlet of the second bin, therefrom it comes to the profile roller, which forms the second layer of 0.4 mm thickness and 0.7 mm rib height, after that the double layer enters the tunnel oven, where at 280°C for 1 hr a microporous sheet of corpuscular structure is being sintered. The obtained material is cooled, washed with water, hydrophilized by sulphanole solution, dried and determined according to its properties.

### Example 22 (Comparative).

Powder emulsion PVC (TU 6-02-69-89) is thermally treated at 130° C, and then it is treated by analogy with Example 21, but without forming the layer of not treated PVC, and sintering proceeds at 200°C for 2 mins. A porous material of corpuscular structure is obtained, which then is cooled, washed, hydrophilized and determined according to its properties.

### Example 23 (Comparative).

The porous material is obtained by analogy with Example 22, sintering being performed at 250°C for 6 mins., i.e. within the ranges of the suggested method. The obtained material has a corpuscular structure.

### Example 24.

Powder emulsion PVC (TU 6-02-69-89) is mixed for 7 mins. in a high-speed mixer (n = 1,000 rpm), where the temperature rises to 130° C due to self-heating, then the material is sieved on the sieve with cell size of 0.2 mm and 4 mm, the fraction of 0.2 to 4 mm is molded in 10 mm thickness layer and is heated in the oven in a free state at 250° C for 6 mins. The porous material properties are determined by analogy with Example 1.

Table 2 illustrates the working conditions and the material properties according to this and the following examples.

### Example 25.

Powder emulsion PVC (GOST 14039-78) is treated as in Example 24.

### Example 26.

Powder microsuspension PVC (TU 6-01-1265-81) is mixed for 10 mins. in the preheated screw mixer (n = 60 rpm), being maintained at a temperature of 150°C, then the material is sieved, after that a fraction of 0.5-4 mm is isolated and treated as in Example 24.

### Example 27.

Powder emulsion PVC (TU 6-02-69-89) is wetted and subjected to simultaneous granulation and classifying in the system of vibrosieves, the fraction having a size of 1 to 2 mm is isolated and treated as in Example 24.

### Examples 28-29.

Powder emulsion PVC (TU 6-02-69-89) is treated by analogy with Example 24, the granule size, the layer thickness and the heating conditions being changed.

The porous materials may be produced on commercial scale according to the method of the present invention and may be used as filters, vibration-, sound- and acoustic-proofing materials, applied in civil and industrial engineering, automotive industry, ship-building industry, aircraft industry, etc., as well as in production of various household articles.

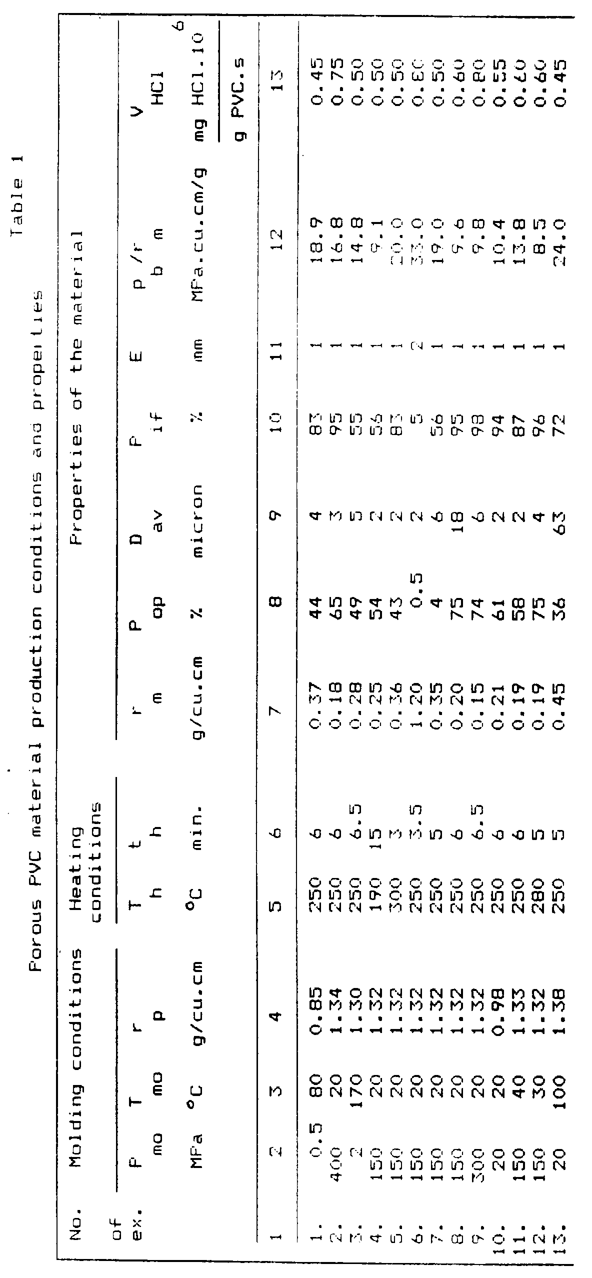

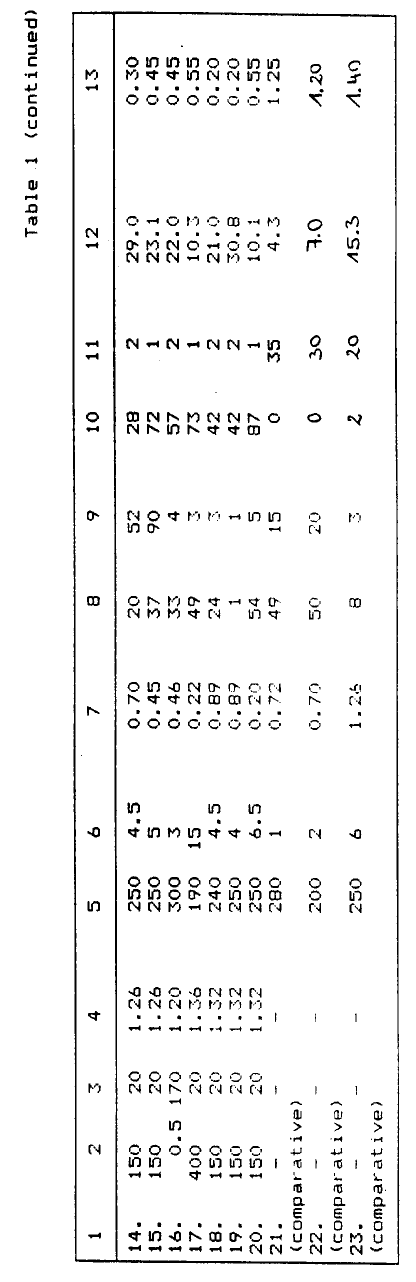

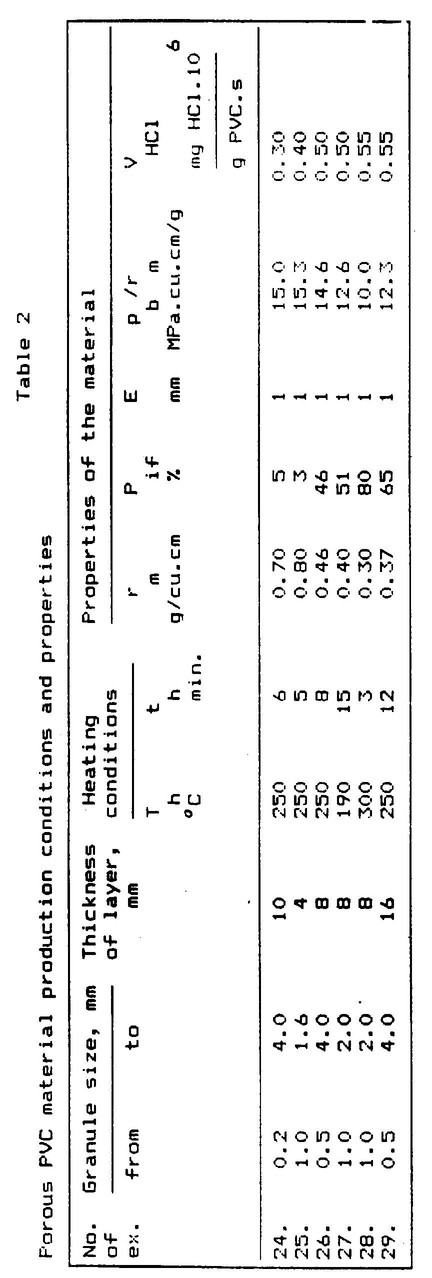

## Claims

1. A porous material characterized by 5-98% cross-linking extent which is determined as percentage of the fraction insoluble in tetrahydrofuran at 30°C, and being obtainable by a process comprising a preliminary treatment of powder emulsion or microsuspension polyvinylchloride and its following heating, wherein polyvinylchloride is subjected to an aggregating treatment and then it is heated at 190-300°C for 3-15 mins, wherein the aggregating treatment comprises molding of powder polyvinylchloride under a pressure of 0.5-400 MPa and at a temperature of 20-170°C to achieve 0.85-1.38 g/cu.cm density or comprises granulating of powder polyvinylchloride, isolation of the fraction of 0.2 to 4.0 mm granules and its molding in a free state as a layer of 4-16 mm height.

2. A process for the production of a porous material as defined in claim 1, comprising a preliminary treatment of powder emulsion or microsuspension polyvinylchloride and its following heating, wherein polyvinylchloride is subjected to an aggregating treatment and then it is heated at 190-300°C for 3-15 mins, wherein the aggregating treatment comprises molding of powder polyvinylchloride under a pressure of 0.5-400 MPa and at a temperature of 20-170°C to achieve 0.85-1.38 g/cu.cm density or comprises granulating of powder polyvinylchloride, isolation of the fraction of 0.2 to 4.0 mm granules and its molding in a free state as a layer of 4-16 mm height.

## Patentansprüche

1. Poröses Material, gekennzeichnet durch 5-98% Vernetzungsgrad, der als Prozentsatz der in Tetrahydrofuran bei 30°C unlöslichen Fraktion bestimmt wird und das erhältlich ist durch ein Verfahren umfassend eine Vorbehandlung von Polyvinylchlorid vom Pulveremulsions- oder Mikrosuspensionstyp und sein anschließendes Erhitzen, wobei Polyvinylchlorid einer aggregierenden Behandlung unterworfen und dann für 15 min auf 190-300°C erhitzt wird, wobei die aggregierende Behandlung das Formen von Polyvinylchlorid-Pulver unter einem Druck von 0,5-400 MPa und bei einer Temperatur von 20-170°C umfaßt, um eine Dichte von 0,85 -1,38 g/cm³ zu erreichen, oder das Granulieren von Polyvinylchlorid-Pulver, Isolieren der Fraktion mit 0,2 bis 4,0 mm-Kügelchen und sein Formen in freiem Zustand zu einer Schicht von 4-16 mm Höhe umfaßt.

2. Verfahren zur Herstellung eines porösen Materials nach Anspruch 1, umfassend eine einleitende Behandlung von Polyvinylchlorid vom Pulveremulsions- oder Mikrosuspensionstyp und sein anschließendes Erhitzen, wobei Polyvinylchlorid einer aggregierenden Behandlung unterworfen und dann 3-15 min auf 190-300°C erhitzt wird, wobei die aggregierende Behandlung das Formen von Polyvinylchlorid-Pulver unter einem Druck von 0,5-400 MPa und bei einer Temperatur von 20-170°C umfaßt, um eine Dichte von 0,85-1,8 g/cm³ zu erreichen oder das Granulieren von Polyvinylchlorid-Pulver, Isolieren der Fraktion mit 0,2 bis 4,0 mm-Kügelchen und sein Formen in freiem Zustand zu einer Schicht von 4-16 mm Höhe umfaßt.

## Revendications

1. Matériau poreux caractérisé par un degré de réticulation de 5 à 98 % qui est déterminé comme le pourcentage de la fraction insoluble dans du tétrahydrofuranne à 30°C, et pouvant être obtenu à l'aide d'un procédé comprenant un traitement préliminaire de poly(chlorure de vinyle) pulvérulent en émulsion ou en microsuspension puis son chauffage, dans lequel on soumet le poly(chlorure de vinyle) à un traitement d'agrégation, puis on le chauffe à une température de 190°C à 300°C pendant 3 à 15 minutes, dans lequel le traitement d'agrégation comprend le moulage de poly(chlorure de vinyle) en poudre sous une pression de 0,5 à 400 MPa et à une température de 20°C à 170°C pour atteindre une masse volumique de 0,85 à 1,38 g/cm³ ou comprend la granulation de poly(chlorure de vinyle) en poudre, l'isolation de la fraction de granulés de 0,2 à 4,0 mm et son moulage dans un état libre en une couche de 4 à 16 mm de hauteur.

2. Procédé pour la production d'un matériau poreux selon la revendication 1, comprenant un traitement préliminaire de poly(chlorure de vinyle) pulvérulent en émulsion ou en microsuspension puis son chauffage, dans lequel on soumet le poly(chlorure de vinyle) à un traitement d'agrégation, puis on le chauffe à une température de 190°C à 300°C pendant 3 à 15 minutes, dans lequel le traitement d'agrégation comprend le moulage de poly(chlorure de vinyle) en poudre sous une pression de 0,5 à 400 MPa et à une température de 20°C à 170°C pour atteindre une masse volumique de 0,85 à 1,38 g/cm³ ou comprend la granulation de poly(chlorure de vinyle) on poudre, l'isolation de la fraction de granulés de 0,2 à 4,0 mm et son moulage dans un état libre en une couche de 4 à 16 mm de hauteur.
